# EUROPÄISCHE PATENTSCHRIFT

(11) **EP 3 934 193 B1**
(45) Veröffentlichungstag und Bekanntmachung des Hinweises auf die Patenterteilung: **23.09.2026**
(21) Anmeldenummer: 20182907.4
(22) Anmeldetag: 29.06.2020
(51) Int. Cl.: H04L 9/40, G06F 3/16, G06F 21/44

(54) **AUTORISIERUNG EINES NUTZERENDGERÄTS BEI DER VERWENDUNG EINES SERVICE IM INTERNET**
AUTHORISATION OF A USER TERMINAL USING A SERVICE ON THE INTERNET
AUTORISATION D'UN TERMINAL UTILISATEUR LORS DE L'UTILISATION D'UN SERVICE SUR INTERNET

(43) Veröffentlichungstag der Anmeldung: 05.01.2022
(73) Patentinhaber: Deutsche Telekom AG, 53113 Bonn (DE)
(72) Erfinder: MINOW, Jascha, 64625 Bensheim (DE); JAHN, Carl, 65191 Wiesbaden (DE); EL-MALLOUKI, Said, 56329 St. Goar (DE); PLATSCHEK, Martin Michael, 12557 Berlin (DE)
(74) Vertreter: karo IP

(56) Entgegenhaltungen:
- WO-A1-2014/063363
- WO-A1-2018/004935
- US-A1- 2012 252 411
- US-A1- 2019 182 176
- US-A1- 2019 199 719

## Beschreibung

Die Erfindung betrifft ein Verfahren, ein Endgerät eines Nutzers sowie ein Kommunikationssystem zur Autorisierung des Nutzerendgeräts bei der Verwendung eines Service im Internet

Nutzerendgeräte - also insbesondere Smartphones, Tablets, aber auch intelligente Lautsprecher - werden immer mehr durch Netzwerke miteinander verknüpft. Dies bietet verschiedene Vorteile, zum einen können Nutzer durch die Vernetzung ihrer Endgeräte in vielfältiger Weise, auch in größeren Gruppen, miteinander kommunizieren und zum anderen können Nutzerendgeräte insbesondere über das Internet mit leistungsstarken Server verbunden werden, wobei die Server zum einen eine erhöhte Rechnungsleistung zum Auslagern von Prozessen anbieten können und/oder auch vielfältige Services bereitstellen können.

Stellt ein Anbieter auf diese Art und Weise einen Service bereit, so muss der Anbieter - aus Kostengründen und/oder Sicherheitsgründen - sicherstellen, dass nur autorisierte Endgeräte den auf einer Plattform bereitgestellten Service nutzen können. Dies geschieht nicht nur, um die Plattform gegen unautorisierte Zugriffe zu schützen, sondern erlaubt auch Geräte zu identifizieren und diesen einen maßgeschneiderten Service anbieten zu können. Die Dienstleistungen, die von einem solchen Service bereitgestellt werden können sind vielfältiger Natur. Es können beispielsweise Sportergebnisse abgefragt, eine Wettervorhersage angesagt und/oder Musik von einem Streaminganbieter abgespielt werden.

Herkömmlicherweise wird dieses Problem gelöst, indem die Nutzerendgeräte, nachfolgend auch als "User Equipment" UE bezeichnet, an der Plattform durch ihre Hardware-ID und/oder einen Zugriffstoken identifiziert und autorisiert werden. Nachteilig sind beide Lösungen allerdings sehr wartungsintensiv, da der Token und die dazugehörigen Sicherheitszertifikate beständig sicher und aktuell gehalten werden müssen.

US 2019/0182176 A1 beschreibt eine nutzerbezogene Authentifizierung, bei der ein Nutzer über ein Client-System (z. B. Smartphone) Audioeingaben liefert ("... words, numbers, or phrases spoken by the ... user ...") und daraus bzw. daraus abgeleitet ein "voiceprint" als biometrisches Merkmal des Nutzers verwendet wird. Die spätere Authentifizierung erfolgt durch Vergleich später empfangener Audioeingaben mit dem gespeicherten voiceprint, um den Sprecher als denselben Nutzer zu identifizieren.

WO 2014/063363 A1 betrifft die Authentifizierung zweier computing devices, wobei einem ersten Gerät ein "validation code" zugeordnet wird und ein zweites Gerät ein vom Nutzer erzeugtes Sound-/Sprachsignal erfasst und zur Prüfung bereitstellt. Typischerweise spricht der Nutzer den validation code in ein Smartphone ein; das System nutzt ein voice recognition module und vergleicht den erkannten Sprachbefehl (ggf. als Text/maschinell lesbarer Term) mit dem validation code, um die Authentifizierung (z. B. für Synchronisation) auszulösen.

WO 2018/004935 A1 betrifft den Zugriff auf Dienste über eine "authenticated identity" (z. B. Token), die aus verschiedenen Faktoren aufgebaut werden kann, u. a. aus Gerätekennungen (device codes/IDs) und biometrischen Daten. Als biometrischer Faktor wird insbesondere "voice data" (Stimm-/Sprachdaten des Nutzers) beschrieben; die Authentifizierung kann über einen Vergleich aktueller Sprachdaten mit gespeicherten Sprachdaten erfolgen.

US 2019/0199719 A1 offenbart eine gerätebezogene Identifikation/Autorisierung, bei der eine "device ID application" auf dem Client-Gerät die Wiedergabe eines "reference sample" über ein Lautsprechersystem veranlasst und parallel ein "captured audio sample" über ein Mikrofonsystem erfasst. Aus dem erfassten Audiosample wird ein "fingerprint"/"sensor-based identifier" erzeugt und gegen ein Archiv ("sensor identifier archive") abgeglichen; abhängig vom Ergebnis wird der Zugriff auf eine Ressource gewährt oder verweigert.

Demnach ist es eine Aufgabe der Erfindung, ein Verfahren, ein Nutzerendgerät sowie ein Kommunikationssystem zur Autorisierung eines Nutzerendgeräts anzugeben, dass den Aufwand der Autorisierung, insbesondere für den Anbieter eines Dienstes im Internet, reduziert.

Gelöst wird diese Aufgabe mit den Merkmalen der unabhängigen Ansprüche.

Die Merkmale der im Folgenden beschriebenen verschiedenen Aspekte der Erfindung bzw. der verschiedenen Ausführungsbeispiele sind miteinander kombinierbar, sofern dies nicht explizit ausgeschlossen ist oder sich technisch zwingend ausschließt.

Erfindungsgemäß ist ein Verfahren zur Autorisierung eines Nutzerendgeräts bei der Verwendung eines Service in einem Kommunikationsnetz, insbesondere dem Internet, angegeben, wobei das Verfahren aufweist:
ein Nutzerendgerät mit einem Prozessor zum Ausführen von Algorithmen und zum Steuern des Nutzerendgeräts sowie eine erste Kommunikationsschnittstelle zum Aufbau einer Datenverbindung mit einem Server im Kommunikationsnetz,
einen Server, wobei der Server den Service für autorisierte Nutzer Endgeräte anbietet;
wobei das Verfahren folgende Schritte umfasst:
- Erzeugung eines für das Nutzerendgerät charakteristischen Audio-Signals bei einer bevorstehenden Nutzung des Service;
   o das für das Nutzerendgerät charakteristische Audio-Signal stellt gewissermaßen eine Audio-ID dar. Eine solche Audio-ID ist analog zu einem Fingerabdruck zu betrachten. Die Audio-ID ist nämlich dem Nutzerendgerät ebenso, bestenfalls eindeutig, zugeordnet wie ein Fingerabdruck einem Menschen. Diese Audio-Signale können im hörbaren, aber auch im nicht hörbaren Frequenzbereich vorgesehen sein. Sind die Audio-Signale im nicht-hörbaren Frequenzbereich vorgesehen, ist es vorteilhaft nicht ersichtlich, dass das Nutzerendgerät gerade seine Audio-ID erzeugt und gegebenenfalls abspielt. Die Erzeugung der Audio-ID kann automatisiert bei einer jeder Inbetriebnahme des Nutzerendgeräts ausgeführt werden, jedenfalls aber dann, wenn der auf dem Server angebotenen Service genutzt werden soll.
- Erfassen des charakteristischen Audio-Signals durch das Nutzerendgerät;
   ∘ der Prozessor hat also Kenntnis davon, dass das die Audio-ID zu einem bestimmten Zeitpunkt erzeugt wird. Dies ermöglicht, dass das Nutzerendgerät, gesteuert durch den Prozessor, die Audio-ID auch gezielt erfassen kann und nicht ständig in einem Erfassungsbereitschaftsmodus laufen muss. Die erfasste Audio-ID kann temporär auf einem Speicher, insbesondere in einem Sicherheitsbereich, des Nutzerendgeräts zur weiteren Verarbeitung abgelegt werden.
- Übertragen des charakteristischen Audio-Signals über die Datenverbindung an den Server;
   o der Prozessor steuert die Übertragung der Audio-ID an den Server, indem er die entsprechenden Daten der Audio-ID über das interne Kommunikationssystem des Nutzerendgeräts an dessen Kommunikationsschnittstelle weiterleitet und zum Übertragen anweist. Der Server empfängt die Audio-ID über seine eigene oder ihm eine zugeordnete Kommunikationsschnittstelle, die nachfolgend auch als eine zweite Kommunikationsschnittstelle bezeichnet wird.
- Ermittlung durch den Server, ob das übertragende Audio-Signal des Nutzerendgeräts mit dem erzeugten Audio-Signal des Nutzerendgeräts übereinstimmt (Authentifizierung);
   o ein Ziel des Verfahrens ist es, dass nur autorisierten Nutzerendgeräten der Zugang zu dem Service gewährt wird. Hierbei muss das Nutzerendgerät zunächst authentifiziert werden. Gewöhnlich geht die Authentifizierung der Autorisierung voraus. Hierbei dient die Audio-ID als Signatur des übertragenen Audio-Signals, welches mit Hilfe eines Private Keys auf Authentizität überprüft wird. Die Überprüfung ist also darauf gerichtet zu evaluieren, ob das übertragene Audio-Signal in genau dem Zustand wie bei seiner Erstellung ist und auch ob es von genau dem erwarteten Nutzerendgerät stammt oder aber, ob es bei der Übertragung verändert wurde und von einem anderen Nutzerendgerät kommt. Dies ist im Prinzip analog zu einem Prüfsummenvergleich. Prinzipiell möglich wäre es auch durch den Server zu ermitteln, ob das übertragende Audio-Signal des Nutzerendgeräts mit einem hinterlegten und autorisierten Audio-Signal in einer Datenbank übereinstimmt, insbesondere kann in einer solchen Datenbank auch hinterlegt sein, welche Nutzerendgeräte "erwartet" werden. Zu diesem Zweck wird die übertragene Audio-ID mit anderen Audio-IDs in einer Datenbank im Hinblick auf eine Übereinstimmung verglichen. Bei den anderen Audio-IDs handelt es sich um autorisierte Audio-IDs, sodass bei einer Übereinstimmung seitens des Servers festgestellt wird, dass auch die übertragene Audio-ID autorisiert ist. Die Datenbank im Rahmen dieser Erfindung weist also bevorzugt Signatur Keys auf. In einer weiteren Ausgestaltung kann eine solche Datenbank auch die Audio ID/Signaturen selbst aufweisen;
- Freischaltung des Nutzerendgeräts durch den Server für den Service bei positiver Übereinstimmung der Audio-Signale (Autorisierung).
   o Durch die Freischaltung wird dem Nutzerendgerät der Zugriff auf den Service ermöglicht. Vorzugsweise gilt die Freischaltung immer nur so lange, wie die hergestellte Datenverbindung aufrechterhalten wird. Beispielsweise kann die Datenverbindung mittels eines Shake-Hand Verfahrens erzeugt werden. Wird das Nutzerendgerät ausgeschaltet oder die Datenverbindung unterbrochen, wo sich das Gerät wieder mit seiner Audio-ID identifizieren. Da dies zweckmäßigerweise automatisiert und ohne Interaktion eines Nutzers von statten geht, ist dies für den Nutzer trotzdem komfortabel, wobei zugleich durch die regelmäßige erneute Autorisierung ein hoher Sicherheitsstandard für den Anbieter des Service gewährleistet wird.

Das Verfahren ermöglicht also eine komfortable und sichere Autorisierung des Nutzerendgeräts auf der Basis eines Audio-Signals. Ein weiterer Vorteil ist, dass prinzipiell eine Vielzahl von Algorithmen existieren, die auf dem Server implementiert werden können, um Audiosignale miteinander zu vergleichen. Hierbei können diesen Algorithmen gewisse Parameter übergeben werden, die spezifizieren, wie weit zwei verschiedene Audio-Signale voneinander abweichen dürfen, um trotzdem als ein gleiches Audio-Signal identifiziert zu werden. Hierbei gilt es zu beachten, dass es viele Umstände gibt, die dazu führen können, dass das Audio Signal kleine Verzerrungen erfährt, die dazu führen würden, dass dieses nicht mehr erfolgreich authentifiziert werden würde, wenn zu strenge Kriterien an die Übereinstimmung des übertragenen Audio-Signals mit dem hinterlegten Audio-Signal angelegt werden.

Zweckmäßigerweise wird das charakteristische Audio-Signals analog durch Betriebsgeräusche des Nutzerendgeräts und/oder digital durch eine auf dem Nutzerendgerät laufende App erzeugt werden.

Die von dem Nutzerendgerät charakteristischen Betriebsgeräusche können beispielsweise schon solche sein, die von dem Nutzerendgerät an sich - ohne weitere Maßnahmen - erzeugt werden. Jedes Nutzerendgerät weist letztlich - auch bedingt durch seine individuelle Montage - im Betrieb unterschiedliche Betriebsgeräusche auf. Zwar sind diese unterschiedlichen Betriebsgeräusche oft gar nicht oder nur sehr leise von dem menschlichen Ohr wahrzunehmen, können aber dennoch durch entsprechende interne Mikrofone des Nutzerendgeräts aufgezeichnet werden. Außerdem ist es möglich charakteristische Betriebsgeräusche künstlich zu erzeugen, indem beispielsweise auf dem Prozessor ein Code hinterlegt wird, wodurch dieser den Lautsprecher des Nutzerendgeräts ansteuert ganz bestimmte charakteristische Frequenzen zu erzeugen. Eine weitere Möglichkeit ist es, die Audio-ID zunächst digital durch eine auf dem Nutzerendgerät laufende App zu erzeugen. Dies hat unter anderem den Vorteil, dass eine solche App gezielt vor dem Nutzer runtergeladen werden kann, wenn dieser an dem Audio-ID Identifizierungsverfahren teilnehmen möchte. Ein weiterer Vorteil ist es, dass solch eine App aktualisiert werden kann, um beispielsweise Sicherheitslücken zu schließen. Der Nutzer kann auch aufgefordert werden, die App zu benutzen, wenn die Betriebsgeräusche nicht zur Überprüfung der Audio-ID geeignet sind. Dies kann beispielsweise dann der Fall sein, wenn die charakteristische Audio-ID von zwei verschiedene Nutzer Endgeräten zu sehr übereinstimmt.

Bevorzugt wird das von der App erzeugte charakteristische Audio-Signal basierend auf einem Passwort und/oder automatisiert basierend auf einem festen Schlüssel generiert.

Vorteilhaft wird dadurch ermöglicht, dass der Nutzer des Nutzerendgeräts auch in der Lage ist ein anderes charakteristisches Audio-Signal zu erzeugen, um sich beispielsweise mit einer neuen Audio-ID bei dem Service anzumelden. Basierend auf dem Passwort, dass der User der App übergibt, wird ein Algorithmus gestartet, der basierend auf diesem Passwort eine Audio-ID generiert. Aus einem anderen Passwort folgt eine andere-Audio ID. Der App kann aber auch ein fester Schlüssel übergeben werden, der als Basis für diesen Algorithmus dient. In diesem Fall ist das Verfahren noch komfortabler für den Nutzer.

Vorzugsweise wird das charakteristische Audio-Signal mit dem auf dem Passwort basierenden Audio-Signal der App angereichert.

Dies hat den Vorteil, dass der Informationsgehalt der an den Server übertragenen Audio-ID erhöht wird. Ein erhöhter Informationsgehalt lässt generell eine weitergehende Datenanalyse bzw. Datenverarbeitung zu. Zum Beispiel kann die Anreicherung des charakteristischen Audio-Signals helfen, weitere Unterscheidungsmerkmale zwischen verschiedenen Audio-IDs zu gewährleisten.

Gemäß einer Ausführungsform wird das auf dem Passwort basierende Audio-Signal auf einer definierten Harmonik hinzugefügt.

Dies hat den Vorteil, dass das zusätzlich hinzugefügte Audio-Signal von dem schon vorhandenen Audio-Signal unterschieden werden kann. Diesbezüglich ist es vorteilhaft, dem Server mitzuteilen auf welchen Frequenzen bzw. auf welche Harmonik das hinzugefügte Audio-Signal vorgesehen ist.

Bevorzugt wird mit dem angereicherten Audio-Signal eine Mehrfaktorauthentifizierung durchgeführt. Hierzu werden Keys zum Prüfsummenvergleich, insbesondere in der Datenbank, vorgehalten und die Audio-ID anhand eines Prüfsummenvergleichs verifiziert. Es ist auch prinzipiell möglich die entsprechenden angereicherten Audio-Signale ebenfalls in der Datenbank auf dem Server zu hinterlegen, damit ein Vergleich bzw. eine Überprüfung effizient durchgeführt werden kann. Das Prinzip der sicheren Mehrfaktorauthentifizierung ermöglicht den Vorteil, dass es durch höhere Harmoniken neben der Stimme und den hörbaren Audiosignalen auf weiteren Frequenzen für die Menschen nicht hörbare Informationen in Form der Audio-ID als zum Beispiel eine persönliche PIN oder ein persönliches Passwort zu übertragen.

Zweckmäßig werden die digital erzeugten charakteristischen Audio-Signale durch einen Lautsprecher des Nutzerendgeräts abgespielt.

Dies bietet den Vorteil, dass die digitalen Audio-Signale hörbar gemacht werden können, um sie aufzunehmen und dann dem Server zur Authentifizierung zu übersenden. Durch den Lautsprecher können ebenfalls die analogen Audio-Signale hörbar gemacht werden, wobei dies unter Umständen gar nicht notwendig ist, da die Betriebsgeräusche des Nutzerendgeräts an sich schon hörbar als Frequenzschwingungen der Luft vorliegen. Bevorzugt weist das Nutzerendgerät hierzu ein Digital-Analogwandler auf. Mittels eines Digital-Analogwandlers können die Lautsprecher angesteuert werden, um die digitale Audio-ID in ein entsprechendes analoges Frequenzsignal umzuwandeln.

Gemäß einem Ausführungsbeispiel werden die die analogen charakteristischen Audio-Signale von einem Mikrofon des Nutzerendgeräts erfasst werden.

Dies bietet den Vorteil, dass sowohl die in analoge Signale umgewandelte digitale Audio-ID als auch die ursprünglich schon analog vorliegende Audio-ID effizient durch das Mikrofon effizient dem Nutzerendgerät zur weiteren Verarbeitung, insbesondere zur Weiterleitung per Audiostream an den Server, zugänglich gemacht werden können. Da die Daten zu dem Server über die Datenverbindung bevorzugt digital gesendet werden, umfasst das Nutzerendgerät ebenfalls einen Analog-Digitalwandler, der analoge Signale in digitale umwandelt.

Bevorzugt werden die digitalen charakteristische Audio-Signale direkt von der Applikation an die erste Kommunikationsschnittstelle zum Übertragen an den Server gesendet werden.

Bei einer Umwandlung der digitalen Audio-Signale in analoge Signale durch den Lautsprecher, die dann wiederum durch das Mikrofon des Nutzerendgeräts aufgezeichnet werden, wird ein potentielles Sicherheitsrisiko geschaffen. Indem die Audio-ID nämlich über den Lautsprecher abgespielt wird, ist es möglich, dass ein Dritter die Audio-ID, selbst wenn sie nicht hörbar ist, durch ein Mikrofon unbemerkt aufzeichnet und diese Daten dann seinerseits verwendet, um nicht autorisierte Nutzerendgeräte bei dem Service anzumelden bzw. zur autorisierten. Es ist nun aber prinzipiell überhaupt nicht notwendig, die digitale Audio-ID erst in eine analoge Audio-ID umzuwandeln und dann wieder in eine digitale Audio-ID zurück zu wandeln. Der Prozessor kann die digitale Audio-ID vorteilhaft direkt an die Kommunikationsschnittstelle zur Übertragung an den Server weiterleiten. Auf diese Weise wird es einem Dritten unmöglich gemacht, bzw. zumindest deutlich erschwert, das Audio-ID unbemerkt mit einem Mikrofon aufzuzeichnen.

Bevorzugt wird bei fehlender Übereinstimmung durch den Server ein Registrierungsprozess gestartet wird oder dass das Nutzerendgeräte abgelehnt.

Dies bietet den Vorteil, dass ein Hersteller des Nutzerendgeräts nicht schon bei der Herstellung die Audio-ID des Gerätes erfassen und dem Server zur Aufnahme in seiner Datenbank bekannt machen muss. Zumindest in dem Fall, dass die Audio-ID basierend auf einem Passwort mittels der digitalen App erzeugt wird, ist dies mithin im Vorfeld auch gar nicht möglich. Durch den Registrierungsprozess wird nun aber in vorteilhafter Weise ermöglicht, dass der Nutzer der Datenbank die Signature Keys selbst bekannt machen kann, sodass diese in der Datenbank hinterlegt und für künftige Authentifizierungsprozesse verwendet werden kann. Ist die Audio-ID nicht in der Datenbank hinterlegt und führt der Nutzer auch keinen Registrierungsprozess durch, so wird die Audio-ID und damit der Zugang zu dem Service abgelehnt, da es sich in diesem Fall um ein nicht autorisiertes Nutzerendgerät handelt.

Zweckmäßigerweise extrahiert der Server die charakteristische Audio-Signale von den anderen Audio-Signalen in einem Audio-Stream vor der Ermittlung der Übereinstimmung. Befinden sich die charakteristischen Audio-Signale in einem vorbestimmten Frequenzbereich, kann ein Algorithmus diesen bestimmten Frequenzbereich herausfiltern und somit die charakteristischen Audio-Signale von anderen Audio-Signalen, wie beispielsweise den Normalsprachbefehlen eines Nutzers bei der Kommunikation mit dem Service, trennen. Dies bietet den Vorteil, dass eine Überprüfung der Übereinstimmung leichter möglich ist oder überhaupt erst möglich wird.

Gemäß einem zweiten Aspekt der Erfindung wird ein Nutzerendgerät - also beispielsweise ein Smartphone, ein Tablet, eine Smartwatch, ein intelligenter Lautsprecher, etc. - zur Verwendung eines Service auf einem Server in einem Kommunikationsnetz angegeben. Bei dem Kommunikationsnetz kann es sich insbesondere um das Internet handeln. Das Nutzer Endgerät weist auf:
- eine erste Kommunikationsschnittstelle, wobei die Kommunikationsschnittstelle zum Aufbau einer Datenverbindung mit einem Kommunikationsnetz ausgebildet ist;
- einen Prozessor ausgebildet zum Ausführen von Algorithmen und zum Steuern des Nutzerendgeräts,
- eine Audio-Signal-Erzeugungseinheit eingerichtet zum Erzeugen eines charakteristischen Audio-Signals des Nutzerendgeräts, wobei der Prozessor eingerichtet ist, das charakteristischen Audio-Signal an die Kommunikationsschnittstelle zum Übertragen an den Server weiterzuleiten;
   o die Audio-Signal-Erzeugungseinheit kann prinzipiell das Nutzerendgerät an sich sein oder aber eine bekannte Kombination aus einem Prozessor, der Audiosignale zunächst digital erzeugt und dann optional einen Lautsprecher zusätzlich ansteuert, sodass dieser die digitalen Signale in analoge Frequenzschwingungen, also Töne, umsetzt. In diesem Fall ist der Lautsprecher eine Audio-Signal-Ausgabeeinheit des Nutzerendgeräts.

Bevorzugt weist das Nutzerendgerät eine Audio-Signal-Erfassungseinheit auf. Die Audio-Signal-Erfassungseinheit ist zweckmäßigerweise ein Mikrofon. Hierbei kann es sich um das Mikrofon handeln über welches der Nutzer seine Sprachbefehle an den Service kommuniziert, es kann sich aber auch um ein zusätzlich vorgesehenes Mikrofon handelte, das speziell für den Frequenzbereich des charakteristischen Audio-Signals optimiert wurde. Ein solches extra hierfür vorgesehenes Mikrofon kann auch im Inneren des Nutzerendgeräts angebracht sein, dies kann besonders vorteilhaft sein, wenn die Betriebsgeräusche des Nutzerendgeräts als charakteristische Audio-Signale verwendet werden.

Gemäß einem dritten Aspekt der Erfindung ist ein Kommunikationssystem zur Verwendung eines Service auf einem Server in einem Kommunikationsnetz, insbesondere dem Internet, angegeben. Das Kommunikationssystem ist zur Durchführung des vorstehend beschriebenen Verfahrens eingerichtet. Das Kommunikationssystem weist auf:
einen Server, wobei der Server einen Service über das Kommunikationsnetz bereitstellt;
ein Nutzerendgerät, wobei das Nutzerendgerät den Service auf dem Server verwendet und über eine Datenverbindung mit dem Server verbunden ist;
wobei der Server eingerichtet ist ein von dem Nutzerendgerät übermitteltes charakteristisches Audio-Signal aus einem Audio-Stream zu extrahieren und mittels mit in einer Datenbank hinterlegten Signature Keys ein übermitteltes mit einem erzeugten Audio-Signal zu vergleichen, wobei der Server zudem ausgebildet ist, das Nutzerendgerät bei einer Übereinstimmung für den Service freizuschalten.

Die Vorteile des zweiten und des dritten Aspekts der Erfindung stimmen im Wesentlichen mit den Vorteilen des ersten Aspekts der Erfindung überein.

Im Folgenden werden bevorzugte Ausführungsbeispiele der vorliegenden Erfindung unter Bezugnahme auf die begleitende Figur erläutert:

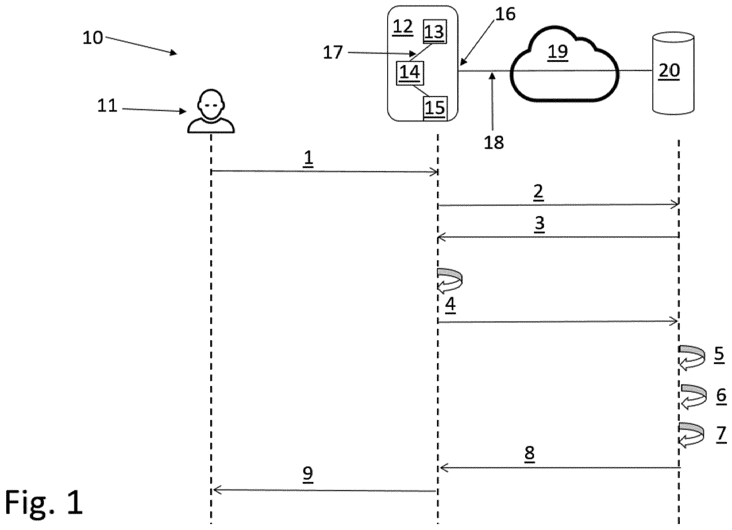

- Fig. 1:: zeigt den Datenverarbeitungsfluss des erfindungsgemäßen Verfahrens zusammen mit dem erfindungsgemäßen Kommunikationssystem.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Fig. 1 zeigt den Datenverarbeitungsfluss des erfindungsgemäßen Verfahrens zusammen mit dem erfindungsgemäßen Kommunikationssystem 10.

Ein Nutzer 11 kann über Sprachbefehle mit dem Nutzerendgerät 12, vorliegend ein Smartphone 12, kommunizieren. Das Smartphone 12 weist einen Prozessor 14 auf, der Berechnungen durchführt und ein Mikrofon 13 sowie einen Lautsprecher 15 und auch eine Kommunikationsschnittstelle 16 steuern kann. Die interne Kommunikation zwischen den Komponenten des Smartphones 12 wird durch eine internes Kommunikationsnetz 17 des Smartphones realisiert. Vermittels der Kommunikationsschnittstelle 16 kann das Smartphone 12 eine Datenverbindung 18 über das Internet 19 mit einem Server 20 aufbauen, wobei auf dem Server 20 ein Dienstleistungsservice für den Nutzer 11 angeboten wird. Eine solcher Dienstleistungservice kann beispielsweise ein Musikstreamingsdienst, eine Wettervorhersage, eine Smart-Home-Funktionalität, etc. sein.

Wichtig ist hierbei, dass der Dienstleistungservice nur für hierfür autorisierte Smartphones 12 zur Verfügung gestellt werden soll. Die erfindungsgemäße Idee ist es in diesem Zusammenhang einen Autorisierungsprozess über eine Audio-ID durchzuführen, die dem Smartphone 12 ähnlich wie ein Fingerabdruck zugeordnet werden kann. Diese Audio-ID weist Audiosignale auf, die aus hörbaren oder auch aus nicht hörbaren Frequenzschwingungen bestehen können. Jedes Smartphone 12 erzeugt eine solche Audio-ID entweder selbst und/oder mittels einer mobilen App. Eine solche Audio-ID ist vorzugsweise nicht veränderbar und wird bei einer Sprach- und Audioübertragung an den Service, der auf dem Server 20 betrieben wird, gesendet. Mittels dieser Audio-ID wird das Smartphone 12 identifiziert und nur eine valide und echte Audio-ID wird dabei von den Service akzeptiert. Ein mögliches Beispiel für einen solchen Service, der auf einem Server läuft ist die von der Telekom betriebene "Hallo Magenta Plattform".

Die Authentifizierung mittels der Audio-ID ermöglicht die Nutzung einer noch sichereren Mehrfaktorauthentifizierung, bei der durch ermutigen neben der Stimme und den hörbaren Audiosignalen auf weiteren Frequenzen für den Menschen nicht hörbaren Information in Form einer mit diesen Informationen angereicherten Audio-ID übertragen werden. Die Audio-ID kann also mit Audiosignalen angereichert werden, die auf einem persönlichen PIN oder einem Passwort basieren.

Ein jedes Nutzerendgerät 12 mit einem Zugriff auf den Dienstleistungsservice generiert also bei der Inbetriebnahme und/oder auf Aufforderung eine einzigartige Audio-ID, mit welcher sich das Gerät bei der Dienstleistung registrieren kann und damit für künftige Nutzung zugriffsberechtigt wird. Die Übermittlung der Audio-ID kann parallel neben der eigentlichen Sprache in einem gemeinsamen Audiostream übermittelt werden.

Nachfolgend wird der Datenfluss aus Fig. 1 beschrieben.
1. Der Nutzer 11 verwendet sein Audi-ID fähiges Nutzerendgerät 12 um einen Sprachbefehl in das Mikrofon 13 des Nutzerendgeräts 12 zu sprechen.
2. Das Nutzerendgerät 12 beginnt mit dem Senden des Audiostreams an den Server 20, wobei der Audiostreams den Sprachbefehl des Nutzers 11 enthält der von dem Service verarbeitet werden soll. Das Nutzerendgerät 12 sendet den Audiobefehl vom Anfang der Spracheingabe bis zum Ende der Spracheingabe. Anfang und Ende der Spracheingabe werden erkannt und es kann ein entsprechendes Signal an den Server 20 gesendet werden, dass die Spracheingabe beendet ist.
3. Sobald eine Sprachverarbeitungseinheit des Servers 20 das Ende der Spracheingabe des Audiostreams feststellt, sendet die Sprachverarbeitungseinheit ein entsprechendes Signal zurück an das Nutzerendgerät 12.
4. Nachdem das Nutzerendgerät 12 das "Ende-der-Spracheingabe-Signal" von dem Server 20 erhalten hat, berechnet bzw. erzeugt das Nutzerendgerät 12 die eindeutige Audio-ID. Die Audio-ID weist die gerätespezifische Audiosignatur von sich selbst und kann zusätzlich auch eine eindeutige Signatur für jeden Sprachbefehl an die Sprachverarbeitungseinheit des Servers 20 senden. Die Audio-ID wird in den Audiostream eingebettet und über die Datenverbindung 17 an den Service auf dem Server 20 gesendet. Das Nutzerendgerät 12 erstellt die Audio-ID und bettet dieses zusammen mit der zu übertragenden "Nutzlast" in eine einzigartige Audiowave ein. Diese einzigartige Audiowave wird individuell für jede Anfrage erzeugt und kann demnach selbst für das selbe Nutzerendgerät 12 jedes Mal unterschiedlich sein, weil eben zu der eindeutigen Audio-ID noch ein variables Audiosignal hinzukommt. Das Nutzerendgerät 12 beendet hiernach vorläufig das Audiostreaming von Audio an den Server 20.
5. Die Sprachverarbeitungseinheit des Servers 20 extrahiert die spezifische Audio-ID, die vom Nutzerendgerät 12 empfangen wurde, nachdem das Ende-der-Sprache-Signal gesendet wurde.
6. Die Sprachverarbeitungseinheit des Servers 20 verwendet das empfangene Audiosignal zur Berechnung der Gültigkeit und der Integrität der übertragenen Audionutzlast, insbesondere durch eine Überprüfung der Audio-ID. Dadurch wird sichergestellt, dass die Daten vom einem autorisierten Nutzerendgerät 12 gesendet wurden und nicht manipuliert sind.
7. Abhängig vom Ergebnis der Überprüfung der Audio-ID gewährt der Server 20 oder verweigert der Server 20 dem Nutzerendgerät 12 Zugang zu dem Service.
8. Falls der Zugang gewährt wird, bearbeitet der Service den Sprachbefehl und stellt dem Nutzerendgerät 12 z.B. einen Wetterbericht zu.
9. Das Nutzerendgerät 12 liest die Rückgabeinformation des Service laut vor oder zeigt die Antwort über den Bildschirm oder Lautsprecher des Kundengeräts.

## Patentansprüche

1. Verfahren zur Autorisierung eines Nutzerendgeräts (12) bei der Verwendung eines Service in einem Kommunikationsnetz (19), insbesondere dem Internet, aufweisend,
das Nutzerendgerät (12) aufweisend eine Rechnereinheit zum Ausführen von Algorithmen und zum Steuern des Nutzerendgeräts (12) sowie eine erste Kommunikationsschnittstelle (16) zum Aufbau einer Datenverbindung (18) mit einem Server (20) im Kommunikationsnetz (19), wobei der Service auf dem Server (20) betrieben wird;
wobei das Verfahren folgende Schritte umfasst:
Erzeugung eines für das Nutzerendgerät (12) charakteristischen Audio-Signals bei einer bevorstehenden Nutzung des Service, wobei das Audio-Signal eine Audio-ID darstellt und die Audio-ID dem Nutzerendgerät (12) eindeutig zugeordnet ist, wobei das Nutzerendgerät seine Audio-ID erzeugt, wobei das charakteristische Audio-Signal digital durch eine auf dem Nutzerendgerät (12) laufende App erzeugt wird, wobei das von der App erzeugte charakteristische Audio-Signal basierend auf einem Passwort generiert wird, wobei das charakteristische Audio-Signal direkt von der App an die erste Kommunikationsschnittstelle (16) zum Übertragen an den Server (20) gesendet wird;
Ermittlung durch den Server, ob das übertragende Audio-Signal des Nutzerendgeräts (12) mit dem erzeugten Audio-Signal des Nutzerendgeräts (12) übereinstimmt;
Freischaltung des Nutzerendgeräts (12) durch den Server (20) für den Service bei Übereinstimmung des übertragenden Audio-Signals mit dem erzeugten Audio-Signals.

2. Verfahren nach Anspruch 1, **dadurch gekennzeichnet, dass** das auf dem Passwort basierende Audio-Signal auf einer definierten Harmonik hinzugefügt wird.

3. Verfahren nach einem der Ansprüche 1 bis 2, **dadurch gekennzeichnet, dass** mit dem angereicherten Audiosignal eine Mehrfaktorauthentifizierung durchgeführt wird.

4. Verfahren nach einem der vorherigen Ansprüche, **dadurch gekennzeichnet, dass** bei fehlender Übereinstimmung durch den Server (20) ein Registrierungsprozess gestartet wird oder dass das Nutzerendgerät (12) abgelehnt wird.

5. Verfahren nach einem der vorherigen Ansprüche, **dadurch gekennzeichnet, dass** der Server (20) die charakteristischen Audio-Signale von anderen Audio-Signalen in einem Audio-Stream vor der Ermittlung der Übereinstimmung extrahiert.

6. Nutzerendgerät (12) zur Verwendung eines Service auf einem Server (20) in einem Kommunikationsnetz (19), insbesondere dem Internet, aufweisend
eine erste Kommunikationsschnittstelle (16), wobei die Kommunikationsschnittstelle (16) zum Aufbau einer Datenverbindung (18) mit dem Kommunikationsnetz (19) ausgebildet ist;
einem Prozessor (14) ausgebildet zum Ausführen von Algorithmen und zum Steuern des Nutzerendgeräts (12),
**gekennzeichnet durch**
eine Audio-Signal-Erzeugungseinheit eingerichtet zum Erzeugen eines für das Nutzerendgerät (12) charakteristischen Audio-Signals, wobei das charakteristische Audio-Signal digital erzeugt wird und eine Audio-ID darstellt, die dem Nutzerendgerät (12) eindeutig zugeordnet ist, wobei die Audio-Signal-Erzeugungseinheit als auf dem Nutzerendgerät (12) laufende App ausgebildet ist und das von der App erzeugte charakteristische Audio-Signal basierend auf einem Passwort generiert wird, und
wobei der Prozessor (14) eingerichtet ist, das von der App erzeugte charakteristische Audio-Signal direkt von der App an die erste Kommunikationsschnittstelle (16) zum Übertragen an den Server (20) weiterzuleiten.

7. Kommunikationssystem zur Verwendung eines Service auf einem Server (20) in einem Kommunikationsnetz (19), insbesondere dem Internet, ausgebildet zur Durchführung eines Verfahrens nach einem der Ansprüche 1 bis 5 aufweisend
den Server (20), wobei der Server (20) einen Service über das Kommunikationsnetz (19) bereitstellt,
ein Nutzerendgerät (12) nach Anspruch 6, wobei das Nutzerendgerät (12) den Service auf dem Server (20) verwendet und über eine Datenverbindung (18) mit dem Server (20) verbunden ist,
**dadurch gekennzeichnet,**
**dass** das Kommunikationssystem zur Durchführung des vorstehend beschriebenen Verfahrens nach einem der Ansprüche 1 bis 5 eingerichtet ist.

## Claims

1. Method for authorizing a user terminal (12) when using a service in a communication network (19), in particular the Internet, comprising,
the user terminal (12) comprising a computing unit for executing algorithms and for controlling the user terminal (12), as well as a first communication interface (16) for establishing a data connection (18) to a server (20) in the communication network (19), wherein the service is operated on the server (20);
wherein the method comprises the following steps:
generating a characteristic audio signal for the user terminal (12) when use of the service is imminent, wherein the audio signal represents an audio ID and the audio ID is uniquely assigned to the user terminal (12), wherein the user terminal generates its audio ID, wherein the characteristic audio signal is generated digitally by an application running on the user terminal (12), wherein the characteristic audio signal generated by the application is generated based on a password, wherein the characteristic audio signal is sent directly from the application to the first communication interface (16) for transmission to the server (20);
determining, by the server, whether the transmitted audio signal of the user terminal (12) matches the generated audio signal of the user terminal (12);
enabling the user terminal (12), by the server (20), for the service upon a match of the transmitted audio signal with the generated audio signal.

2. Method according to claim 1, **characterized in that** the audio signal based on the password is added at a defined harmonic.

3. Method according to one of claims 1 to 2, **characterized in that** multi-factor authentication is performed with the enriched audio signal.

4. Method according to one of the preceding claims, **characterized in that**, in the absence of a match, a registration process is initiated by the server (20), or the user terminal (12) is rejected.

5. Method according to one of the preceding claims, **characterized in that** the server (20) extracts the characteristic audio signals from other audio signals in an audio stream before determining the match.

6. User terminal (12) for using a service on a server (20) in a communication network (19), in particular the Internet, comprising
a first communication interface (16), wherein the communication interface (16) is designed to establish a data connection (18) to the communication network (19);
a processor (14) designed to execute algorithms and to control the user terminal (12), **characterized by**
an audio-signal generation unit configured to generate a characteristic audio signal for the user terminal (12), wherein the characteristic audio signal is generated digitally and represents an audio ID that is uniquely assigned to the user terminal (12),
wherein the audio-signal generation unit is designed as an application running on the user terminal (12), and the characteristic audio signal generated by the application is generated based on a password, and
wherein the processor (14) is configured to forward the characteristic audio signal generated by the application directly from the application to the first communication interface (16) for transmission to the server (20).

7. Communication system for using a service on a server (20) in a communication network (19), in particular the Internet, designed to carry out a method according to one of claims 1 to 5, comprising
the server (20), wherein the server (20) provides a service via the communication network (19),
a user terminal (12) according to claim 6, wherein the user terminal (12) uses the service on the server (20) and is connected to the server (20) via a data connection (18),
**characterized in that**
the communication system is configured to carry out the above-described method according to one of claims 1 to 5.

## Revendications

1. Procédé pour autoriser un terminal utilisateur (12) lors de l'utilisation d'un service dans un réseau de communication (19), en particulier sur Internet, comprenant le fait que
le terminal utilisateur (12) comporte une unité informatique pour exécuter des algorithmes et pour commander le terminal utilisateur (12) ainsi qu'une première interface de communication (16) pour établir une connexion de données (18) avec un serveur (20) dans le réseau de communication (19), le service étant exploité sur le serveur (20) ;
le procédé comprenant les étapes consistant à :
générer un signal audio caractéristique du terminal utilisateur (12) lors d'une utilisation imminente du service, le signal audio représentant un ID audio et l'ID audio étant attribué de manière unique au terminal utilisateur (12), le terminal utilisateur générant son ID audio, le signal audio caractéristique étant généré numériquement par une application exécutée sur le terminal utilisateur (12), le signal audio caractéristique généré par l'application étant généré sur la base d'un mot de passe, le signal audio caractéristique étant envoyé directement de l'application à la première interface de communication (16) pour être transmis au serveur (20) ;
déterminer, par l'intermédiaire du serveur, si le signal audio transmis du terminal utilisateur (12) concorde avec le signal audio généré du terminal utilisateur (12) ;
activer le terminal utilisateur (12) par l'intermédiaire du serveur (20) pour le service en cas de concordance du signal audio transmis avec le signal audio généré.

2. Procédé selon la revendication 1, **caractérisé en ce que** le signal audio basé sur le mot de passe est ajouté sur une harmonique définie.

3. Procédé selon l'une des revendications 1 à 2, **caractérisé en ce qu'**une authentification à plusieurs facteurs est effectuée au moyen du signal audio enrichi.

4. Procédé selon l'une des revendications précédentes, **caractérisé en ce qu'**en cas de non-concordance, un processus d'enregistrement est lancé par le serveur (20) ou **en ce que** le terminal utilisateur (12) est rejeté.

5. Procédé selon l'une des revendications précédentes, **caractérisé en ce que** le serveur (20) extrait les signaux audio caractéristiques d'autres signaux audio dans un flux audio avant la détermination de la concordance.

6. Terminal utilisateur (12) pour l'utilisation d'un service sur un serveur (20) dans un réseau de communication (19), en particulier sur Internet, comprenant une première interface de communication (16), l'interface de communication (16) étant conçue pour établir une connexion de données (18) avec le réseau de communication (19) ;
un processeur (14) configuré pour exécuter des algorithmes et pour commander le terminal utilisateur (12),
**caractérisé par**
une unité de génération de signal audio conçue pour générer un signal audio caractéristique du terminal utilisateur (12), le signal audio caractéristique étant généré numériquement et représentant un ID audio attribué de manière unique au terminal utilisateur (12),
l'unité de génération de signal audio étant réalisée sous la forme d'une application exécutée sur le terminal utilisateur (12) et le signal audio caractéristique généré par l'application étant généré sur la base d'un mot de passe, et
le processeur (14) étant conçu pour transmettre le signal audio caractéristique généré par l'application directement de l'application à la première interface de communication (16) pour le transmettre au serveur (20).

7. Système de communication permettant l'utilisation d'un service sur un serveur (20) dans un réseau de communication (19), en particulier sur Internet, configuré pour mettre en œuvre un procédé selon l'une des revendications 1 à 5, comprenant
le serveur (20), le serveur (20) fournissant un service par l'intermédiaire du réseau de communication (19),
un terminal utilisateur (12) selon la revendication 6, le terminal utilisateur (12) utilisant le service sur le serveur (20) et étant connecté au serveur (20) par l'intermédiaire d'une connexion de données (18),
**caractérisé en ce que**
le système de communication est conçu pour mettre en œuvre le procédé décrit ci-dessus selon l'une des revendications 1 à 5.
